# EUROPÄISCHE PATENTSCHRIFT

(11) **EP 0 621 094 B1**
(45) Veröffentlichungstag und Bekanntmachung des Hinweises auf die Patenterteilung: **14.08.1996**
(21) Anmeldenummer: 94104068.5
(22) Anmeldetag: 16.03.1994
(51) Int. Cl.: B21D 43/05, B23Q 3/12

(54) **Vorrichtung zum Kuppeln und Entkuppeln bzw. zum Verriegeln und Entriegeln von Ausbau-/Austauschteilen, wie Werkzeuge, Greiferschienenteilstücke u. dgl.**
Device for coupling and uncoupling or locking and unlocking of additional or exchangeable pieces like tools, transfer gripper bar sections or the like
Dispositif pour coupler et désaccoupler, le cas échéant pour verrouiller et déverrouiller des pièces additionnelles ou interchangeables comme des outils, portions de rail pour pinces de transfert ou similaires

(30) Priorität: 23.03.1993 DE 4309237
(43) Veröffentlichungstag der Anmeldung: 26.10.1994
(73) Patentinhaber: L. SCHULER GmbH, D-73033 Göppingen (DE)
(72) Erfinder: Rieger, Walter, D-73037 Göppingen (DE); Thudium, Karl, D-73116 Wäschenbeuren (DE); Kuckelsberg, Frank, D-33611 Bielefeld (DE)

(56) Entgegenhaltungen:
- EP-A- 0 274 932
- EP-A- 0 314 888
- DE-A- 3 634 756
- DE-A- 3 812 365
- DE-A- 4 207 795
- DE-C- 4 119 450

## Beschreibung

Die Erfindung betrifft eine Vorrichtung zum Kuppeln und Entkuppeln gemäß dem Oberbegriff von Anspruch 1 (siehe z.B. DE-A-38 12 365).

Vorrichtungen dieser Art dienen im z.B. Pressenbau dem für den Betriebszustand erforderlichen Zustand zwischen Austauschteilen und nicht auszutauschenden Teilen. Es sind Werkzeugoberteile am Pressenstößel oder auch Greiferschienenteilstücke bei Werkzeugwechsel auszutauschen. Der Wechselvorgang einschließlich Entkuppeln und Kuppeln läuft vollautomatisch ab.

In der DE-A-38 12 365 ist eine Transferpresse mit in der Länge teilbaren Greiferschienen beschrieben mit in austauschbare Teile und in pressenseitige, in der Presse verbleibenden Teile. Für den Betrieb sind die Greiferschienenteile untereinander starr zu verbinden. Hierfür ist in einem Greiferschienenteil ein Kraftspannelement in Art eines Drehspanners eingebracht, dessen Spannbolzen mit dem Hammerkopf hinter einer Spannfläche des anderen Greiferschienenteils verspannbar ist. Die Kraft des Spannens und Haltens muß von dem Kraftspannelement aufgebracht werden.

Demgegenüber ist es Aufgabe der Erfindung, unter Verwendung von Spannsegmenten die vom Antrieb - Kraftspannelement - erzeugte Kraft auf die Kuppelebene um einen Faktor größer 1, z.B. 3 bis 4, zu verstärken.

Diese Aufgabe ist gelöst durch die im Anspruch 1 angegebenenen Merkmale. Die Merkmale der weiteren Ansprüche stellen vorteilbehaftete Ausführungen der Vorrichtung nach der Erfindung dar.

Ein ganz entscheidender Vorteil ist hierbei die Gewichtsreduzierung der Vorrichtung. Bei in Leichtbauweise ausgeführten Greiferschienen würde sich eine Gewichtserhöhung durch die Masse der Kupplungsvorrichtung im Kuppelbereich ungünstig auf die Öffnen-Schließen- und Heben-Senken-Bewegungen auswirken. Es können jedoch mit der Kupplungsvorrichtung relativ kleinen Antriebsleistungen hohe Spannkräfte erzielt werden.

Anhand eines in der Zeichnung dargestellten Ausführungsbeispiels soll im folgenden die Erfindung näher erläutert werden.

Es zeigen:
- Fig. 1: Greiferschienenteile mit einer Vorrichtung nach der Erfindung im nicht gekuppelten Zustand,
- Fig. 2: Greiferschienen mit einer Vorrichtung nach der Erfindung im Kuppelzustand in einer Teilansicht und
- Fig. 3: Einzelteile der Kupplung in einer Perspektive.

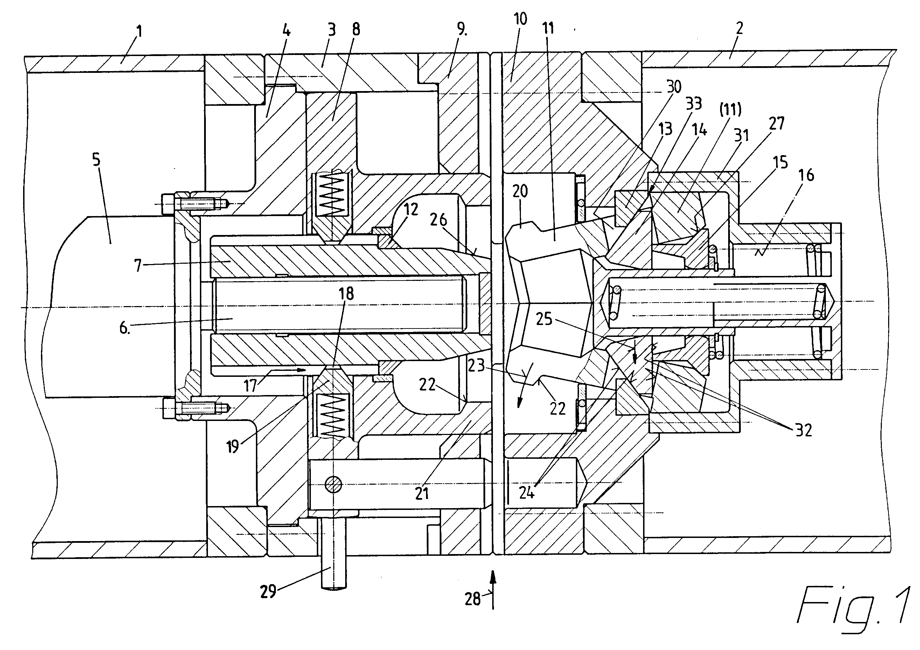

Der Aufbau der Kupplungsvorrichtung soll anhand der Fig. 1 beschrieben werden. Das erste Machinenteil 1 kann im Aufnahmebereich eines Pressenstößels einer Presse zur Befestigung eines Werkzeugoberteils, Maschinenteil 2 sein. Für die Beschreibung wurde jedoch der Kupplungsbereich von zwei sich horizontal erstreckenden Greiferschienenteilen, Maschinenteile 1 und 2 gewählt. An das Ende des Maschinenteils 1 ist ein Gehäuse 3 angeschraubt und durch eine Abschlußplatte 9 verschlossen. In den Maschinenteil 1 ist ein Stellmotor 5 elektrischer, pneumatischer oder hydraulischer Art über eine Flanschplatte 4 angeflanscht. Der Stellmotor 5 wirkt über seine Gewindespindel 6 als Antriebselement mit einer Spannhülse 7 zusammen. Die Spannhülse 7 erstreckt sich mittig zu dem Gesamt-Aufbau und in Längserstreckung der Maschinenteile 1 und 2. In dem Gehäuse 3 ist eine Arretierbuchse 8 bis zum Anschlag mit der Abschlußplatte 9 verschieblich und vermittels Bolzen 29 drehgesichert gelagert. In die Arretierbuchse 8 ist ein profilierter Durchbruch 17 eingebracht zum Durchführen der in gleicher Weise außen profilierten Spannhülse 7. Die Arretierbuchse 8 weist in dem dem zweiten Maschinenteil 2 zugewandten Endteil einen kragenförmigen Bund 21 auf, der durch Hinterdrehen und Anformen von Keilflächen 22 gebildet ist. In den Außenumfang der Spannhülse 7 ist eine Umfangsnut 18 eingearbeitet. In die Umfangsnut 18 greifen ein oder mehrere federnd in der Arretierbuchse gelagerte Nocken 19 ein. Auf der Spannhülse 7 ist ein Keilring 12 aufgeschoben. Die Spannhülse 7 ist an dem dem zweiten Maschinenteil 2 und den darin angeordneten weiteren Kupplungsmitteln zugewandten Endteil mit einem Kegelstumpf 26 versehen.

An den Maschinenteil 2 ist ein Gehäuseteil 10 angeflanscht zur Aufnahme der weiteren, mit der Spannhülse 7 und der Arretierbuchse 8 im Maschinenteil 1 zusammenwirkenden, von diesen beaufschlagbaren Spannelementen. An dem Gehäuseteil 10 sind umfangsmäßig Druckstücke 13, z.B. 4 Teile, befestigt. Auf die Druckstücke 13 ist je ein Spannsegment 11 aufgesetzt, wobei die Druckstücke 13 in einen Durchbruch 30 im Spannsegment 11 greifen. In jeden Durchbruch 30 ist weiterhin ein Keilstück 14 eingesetzt, das über Keilflächen 24 mit dem Druckstück 13 und über Keilflächen 32 mit dem Spannsegment zusammenwirkt. Auf die Keilstücke 14 wirkt ein vermittels Feder 16 druckbelasteter Rückstellring 15. Der Rückstellring 15 liegt über Flächenbereiche, Anlageflächen 27, an dem hinteren, rechten Ende der Spannsegmente 11 an. Jedes Spannsegment 11 weist in dem vorderen, linken Bereich einen hakenförmigen Ansatz 20 auf mit einer Keilfläche 22. Der Gehäuseteil 10 ist in dem rechten Bereich durch ein weiteres Gehäuseteil 31 verschlossen gehalten.

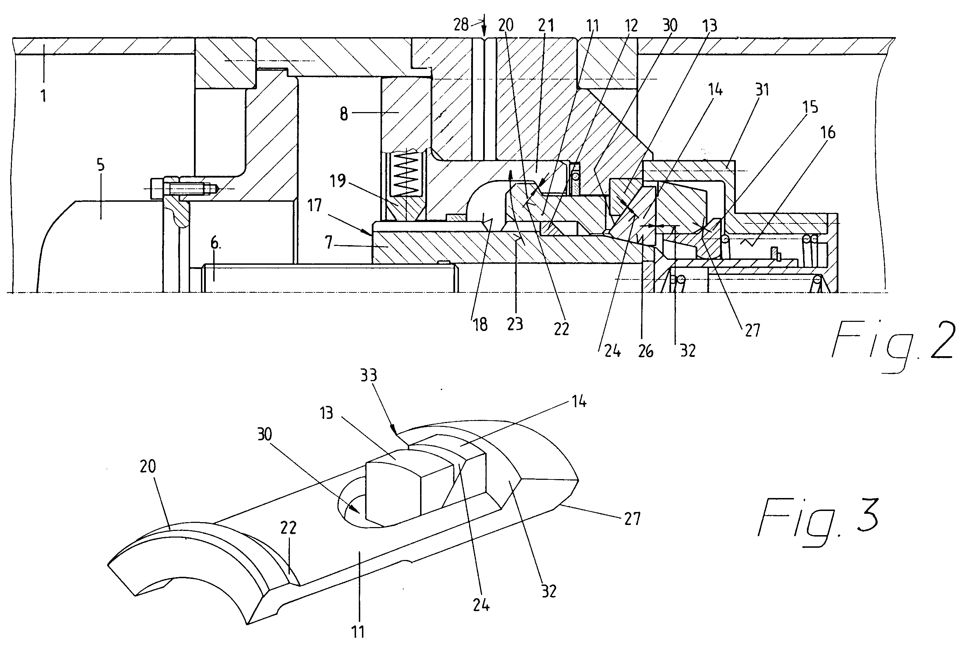

In Fig. 3 ist zum besseren Erkennen ein Spannsegment 11 mit dem Durchbruch 30 gezeigt. Durch den Durchbruch 30 greifen das in dem Gehäuseteil 10 (Fig. 1) gelagerte Druckstück 13 und das sich an der Auflagefläche 32 des Spannsegments 11 abstützende Keilstück 14.

Der Kuppelvorgang der Vorrichtung beginnt mit dem Verschieben der Spannhülse 7 in den Maschinenteil 2 unter Mitnahme der Arretierbuchse 8. Die Arretierbuchse 8 kommt zur Anlage an der Innenseite der Abschlußplatte 9, während die Spannhülse 7 weiterbewegt wird. Der bzw. die Nocken 19 werden infolge der Anformungsschrägen aus der Umfangsnut 18 herausgeführt. Der Kegelstumpf 26 an der Spannhülse 7 gelangt in Wirkeingriff mit den Spannsegmenten 11 und verdrängt diese nach außen entsprechend der Pfeilrichtung 23. Die Bewegung ist im wesentlichen eine Kippbewegung um die Kante 33. Die verdrängte Stellung der Spannsegmente 11 wird anschließend gehalten durch den Keilring 12.

Die Hakenansätze 20 an den Spannelementen verschieben sich hinter den kragenartigen Bund 21 an der Arretierbuchse. Die Keilflächen 22 an den Hakenansätzen 20 und dem Bund 21 kommen unter Pressung zur Anlage bei Verdrängen der Keilstücke 14 in Pfeilrichtung 25 bei weiterem Eintauchen des Kegelstumpfes 26 an der Spannhülse.

Die Kupplungsstellung der Spannteile in den Maschinenteilen 1 und 2 ist in Fig. 2 gezeigt. Die Lösebewegung beginnt mit dem Zurückbewegen der Spannhülse 7. Der Rückstellring 15 drückt die Spannsegmente 11 über die Anlageflächen 27 nach außen, die Keilstücke 14 werden zurückgestellt. Es ist sichergestellt, daß beim Spannen die Hakenansätze 20 sich hinter dem Bund 21 befinden, bevor das Spannen erfolgt. Spannhülse 7 und Keilring 12 sichern diese Stellung. Dementsprechend erfolgt eine Freigabe bzw. eine Bewegung der Spannsegmente um die Kante 33 im Sinne der Pfeilrichtung 25 erst nach dem Entspannen.

## Patentansprüche

1. Vorrichtung zum Kuppeln und Entkuppeln bzw. zum Verriegeln und Entriegeln von Ausbau-/Austauschteilen wie Werkzeuge, Greiferschienenteilstücke u. dgl. Maschinenteile an maschinenfesten bzw. nicht auszutauschenden Maschinenteilen, insbesondere zur Verwendung in Pressen, mit Kuppelbereichen und einem in einem Kuppelbereich eingebrachten Kraftspannelement, **gekennzeichnet durch** eine zentral angeordnete in Spannrichtung sich erstreckende Spannhülse (7) in einem ersten Maschinenteil (1), die vermittels Stellmotor (5) in einen zweiten Maschinenteil (2) verschiebbar ist, eine zumindest über einen Teilweg der Spannhülse (7) mitbewegte Arretierbuchse (8) und eine oder auch mehere Spannsegmente (11) in dem zweiten Maschienteil (2), die durch die Spannhülse (7) und bei deren Bewegung zunächst aus einer Entriegelstellung in eine Verriegelstellung in Wirkeingriff mit der Arretierbuchse (8) verdrängbar sind und durch ein oder mehrere Keilstücke (14), die nach dem Erreichen der Verriegelungsstellung in Wirkeingriff mit der Spannhülse (7) gelangen und von dieser radial verdrängbar sind, die sich hierbei einerseits an dem zweiten Maschinenteil (2) bzw. einem diesem zugeordneten Gehäuseteil (10) und andererseits an dem Spannsegment (11) abstützen und dieses beim Erreichen der Verriegelungsstellung in die Arretierbuchse (8) in Richtung der Kuppelebene (28) verdrängen.

2. Vorrichtung nach Anspruch 1, **dadurch gekennzeichnet**, daß die Arretierbuchse (8) gegen Verdrehung gesichert ist, einen zentralen Durchbruch (17) aufweist, in dem die Spannhülse (7) in Art einer Keilwelle längsbeweglich gelagert ist und daß die Spannhülse (7) eine umlaufende Umfangsnut (18) aufweist und die Arretierbuchse (8) mit zumindest einem federnd gelagerten Nocken (19) zum Eingriff in die Umfangsnut (18) versehen ist, wobei der / die Nocken (19) während der Verschiebebewegung der Spannhülse (7) infolge Bewegungsbegrenzung der Arretierbuchse (8) außer Eingriff mit der Umfangsnut (18) gelangt.

3. Vorrichtung nach Anspruch 1, **dadurch gekennzeichnet**, daß die Arretierbuchse (8) mit einem kragenartigen Bund (21) versehen ist, hinter dem die Spannsegmente (11) mit herausragenden Hakenansätzen (20), die durch radiale Verdrängbewegung (23) nach der Bewegungsbegrenzung der Arretierbuchse (8) verrastbar sind, wobei Bund (21) und Hakenansätze (20) mit zusammenwirkenden Keilflächen (22) versehen sind, die durch die radiale Verdrängbewegung (23) in Wirkeingriff gelangen.

4. Vorrichtung nach Anspruch 1, **dadurch gekennzeichnet**, daß die Spannhülse (7) mit einer Keilfläche (26) versehen ist bzw. einen kegelstumpfförmigen Ansatz aufweist, mit der Keilstücke (14) radial nach außen (Pfeil 25) verdrängbar sind, daß die Keilstücke (14) sich über eine Keilfläche (24) an Keilflächen (24) von Druckstücken (13) und an Keilflächen (32) an den Spannsegmenten (11) abstützen, wobei die Druckstücke (13) an dem zweiten Maschinenteil (2) festgesetzt sind.

5. Vorrichtung nach Anspruch 1, **gekennzeichnet durch** einen zum Lösen federbelasteten Rückstellring (15) mit einer Anlagefläche (27), die ständig in Anlage mit einer Anlagefläche (27) an den Spannsegmenten (11) steht und diese im Sinne einer Entriegelung belastet.

## Claims

1. Device for coupling and uncoupling or for locking and unlocking removable/exchangeable parts, such as tools, gripper rail sections and suchlike machine parts, on machine parts fixed to the machine or not to be exchanged, in particular for use in presses, having coupling areas and a power-operated clamping element incorporated in one coupling area, characterized by a centrally arranged clamping sleeve (7) in a first machine part (1), which clamping sleeve (7) extends in the clamping direction and can be shifted into a second machine part (2) by means of a servomotor (5), a locking bush (8) moved along with the clamping sleeve (7) at least over part of the travel of the latter, and one or even more clamping segments (11) in the second machine part (2), which clamping segments (11) can be displaced by the clamping sleeve (7) and during its movement first of all from an unlocking position into a locking position in operative engagement with the locking bush (8) and by one or more wedge pieces (14), which, after the locking position is reached, come into operative engagement with the clamping sleeve (7) and can be displaced radially by the latter and which in the process are supported on the one hand on the second machine part (2) or a housing part (10) allocated to the latter and on the other hand on the clamping segment (11) and displace the latter into the locking bush (8) in the direction of the coupling plane (28) when the locking position is reached.

2. Device according to Claim 1, characterized in that the locking bush (8) is secured against rotation and has a central aperture (17) in which the clamping sleeve (7) is mounted in a longitudinally movable manner like a splined shaft, and in that the clamping sleeve (7) has an encircling peripheral groove (18) and the locking bush (8) is provided with at least one spring-mounted dog (19) for engaging in the peripheral groove (18), the dog/dogs (19) disengaging from the peripheral groove (18) during the shifting movement of the clamping sleeve (7) as a result of a restraint of movement of the locking bush (8).

3. Device according to Claim 1, characterized in that the locking bush (8) is provided with a collar-like shoulder (21) behind which the clamping segments (11) can be restrained by projecting hook extensions (20) which can be interlocked by radial displacement movement (23) after the restraint of movement of the locking bush (8), the shoulder (21) and hook extensions (20) being provided with interacting wedge surfaces (22) which come into operative engagement through the radial displacement movement (23).

4. Device according to Claim 1, characterized in that the clamping sleeve (7) is provided with a wedge surface (26) or has a frustoconical extension with which wedge pieces (14) can be displaced radially outwards (arrow 25), and in that the wedge pieces (14) are supported via a wedge surface (24) on wedge surfaces (24) of thrust pieces (13) and on wedge surfaces (32) on the clamping segments (11), the thrust pieces (13) being secured to the second machine part (2).

5. Device according to Claim 1, characterized by a resetting ring (15) spring-loaded for release and having a bearing surface (27) which is constantly in contact with a bearing surface (27) on the clamping segments (11) and loads the latter for unlocking.

## Revendications

1. Dispositif pour coupler et désaccoupler, le cas échéant pour verrouiller et déverrouiller, des pièces additionnelles ou interchangeables telles que des outils, des portions de rail pour pinces de transfert ou des éléments de machines similaires, à des éléments de machines fixes, le cas échéant non interchangeables, en particulier pour une application sur des presses, avec des zones de couplage et avec un élément de serrage disposé dans une zone de couplage, **caractérisé en ce qu'**il comporte une douille de serrage (7) disposée de façon centrale et s'étendant dans une direction de serrage, dans un premier élément de machine (1) qui peut être déplacé par coulissement dans un deuxième élément de machine (2) au moyen d'un moteur de réglage (5), une boîte d'arrêt (8) associée au déplacement sur au moins une partie de la trajectoire de la douille de serrage (7) et un ou également plusieurs segments de serrage (11) dans le deuxième élément de machine (2), ces segments pouvant être poussés en contact avec la boîte d'arrêt (8) par entraînement avec la douille de serrage (7) lors de son déplacement qui l'amène hors d'une position déverrouillée dans une position verrouillée et pouvant être radialement repoussés par celle-ci par l'intermédiaire d'une ou de plusieurs pièces coniques (14) qui, lorsque la position de verrouillage est atteinte, se trouvent en appui opérationnel avec la douille de serrage (7), ces pièces coniques prenant appui et étant poussées d'une part contre le deuxième élément de machine (2), respectivement une pièce de boîtier (10) associée à cet élément de machine, et d'autre part contre le segment de serrage (11) lorsque la position de verrouillage est atteinte, dans la boîte d'arrêt (8) en direction du plan de couplage (28).

2. Dispositif selon la revendication 1, **caractérisé en ce que** la boîte d'arrêt (8) est bloquée en rotation et présente un alésage central (17) dans lequel la douille de serrage (7) est montée à la manière d'un arbre conique et peut coulisser axialement, et en ce que la douille de serrage (7) comporte une rainure annulaire périphérique (18), la boîte d'arrêt (8) comportant au moins un ergot (19) à ressort agencé pour s'engager dans ladite rainure périphérique (18), le ou les ergots (19) n'étant pas en prise avec la rainure périphérique (18) pendant le déplacement en coulissement de la douille de serrage (7) en raison de la limitation au déplacement imposé à la boîte d'arrêt (8).

3. Dispositif selon la revendication 1, **caractérisé en ce que** la boîte d'arrêt (8) est pourvue d'un rebord (21) à col, derrière lequel les segments de serrage (11) comportent des becs protubérants (20) qui peuvent s'encliqueter suite à une poussée radiale (23) en direction de las limitation de course de la boîte d'arrêt (8), le rebord (21) et les becs protubérants (20) étant pourvus de surfaces coniques (22) qui coopèrent et entrent en contact sous l'effet de la poussée radiale (23).

4. Dispositif selon la revendication 1, **caractérisé en ce que** la douille de serrage (7) est pourvue d'une surface conique (26) ou présente, le cas échéant, une pièce rapportée tronconique, qui est agencée pour repousser radialement vers l'extérieur (flèche 25) les pièces coniques (14), en ce que les pièces coniques (14) prennent appui sur des surfaces coniques (24) de pièces d'appui (13) par l'intermédiaire d'une surface conique (24) et sur des surfaces coniques (32) des segments de serrage (11), les pièces d'appui (13) étant solidaires du deuxième élément de machine (2).

5. Dispositif selon la revendication 1, **caractérisé en ce qu'**il comporte une bague de rappel (15) libre, sollicitée par un ressort, pourvue d'une surface d'appui (27) qui est constamment en appui par la surface d'appui (27) contre les segments de serrage (11) pour les solliciter en vue d'assurer un déverrouillage.
